# EUROPEAN PATENT APPLICATION

(11) **EP 3 825 950 A1**
(43) Date of publication of application: **26.05.2021**
(21) Application number: 18926747.9
(22) Date of filing: 26.07.2018
(51) Int. Cl.: G06Q 50/10

(54) **CREDIT GUARANTEE SYSTEM**

(30) Priority: 18.07.2018 JP 2018134802
(71) Applicant: Rui Long Lab Inc., Mito-shi, Ibaraki 310-0913 (JP)
(72) Inventor: IIJIMA, Mitsuaki, Mito-shi, Ibaraki 310-0913 (JP)
(74) Representative: Regimbeau
(86) International application number: PCT/JP2018/028054
(87) International publication number: WO 2020/017062

(57) **Abstract**

To provide a credit guarantee system (1) capable of granting credit to an alias of a user who uses a network and avoiding a situation where personal information or the like is required to be disclosed, the credit guarantee system configured to grant credit to an alias (1) includes: a user device (10) of a user who wants to use an alias which can be connected to a network; a provider device (20) of a provider which guarantees credibility of the alias, wherein the provider device (20) can be connected to the network, and the alias of the user the credibility of which has been confirmed is registered in the provider device (20); and a third party device (30) which can be connected to the network and can communicate with the user device (10) and the provider device (20), and when the provider device (20) receives from the user device (10) a notice of the third party device (30) to which a guarantee notification for guaranteeing the credibility needs to be sent, the provider device (20) issues to the third party device (30) the guarantee notification to the effect that the credibility of the alias has been confirmed.

## Description

### TECHNICAL FIELD

The present disclosure relates to a credit guarantee system.

### BACKGROUND ART

As the Internet society progresses, communications and transactions on the Internet have become the foundation of social life. Reports have been made such as: a survey on the awareness of anonymity of Internet users based on cases of compromise of personal information etc.; and the organizing of institutional matters that need to be examined for anonymous sales and purchases on the Internet (see Non Patent Literature 1).

### Citation List

### Non Patent Literature

[Non Patent Literature 1] Ministry of Internal Affairs and Communications, Institute of Information and Communications Policies (Research and Research Department), "Internet and Anonymity" [online], March 2008, [Search on June 23, 2018], Internet <URL:http://www.soumu.go.jp/iicp/chousakenkyu/data/research/survey/telecom/ 2008/2008-1-01. pdf>

### SUMMARY OF INVENTION

### Technical Problem

When Internet users do not want to disclose their personal information, the Internet users use a pseudonym or the like instead of his/her real name. The Internet users also take measures to avoid their personal information being made public by not disclosing information that could identify him/her such as an address, a telephone number and an email address.

However, for example, in commercial transactions such as sales and purchases on the Internet, the pseudonym is not enough to gain credit. Even if the users who conduct commercial transactions or the like do not want to disclose their personal information, it is often the case that the users have no choice but to disclose their personal information (the real name, the address, the telephone number, the email address or the like).

Further, anonymous communication problem and cases similar to crimes have occurred in social network services and social network games. Therefore, there is need for communication between credible pseudonyms.

The present invention has been made in view of such circumstances. The present disclosure provides a credit guarantee system capable of granting credit to an alias of a user who uses a network and avoiding a situation where personal information or the like is required to be disclosed.

### Solution to Problem

In order to achieve the above object, the present disclosure provides configurations below.
(1) A credit guarantee system of the disclosure is a credit guarantee system configured to grant credit to an alias, including: a user device of a user who wants to use an alias which can be connected to a network; a provider device of a provider which guarantees credibility of the alias, the provider device capable of being connected to the network, and the alias of the user the credibility of which has been confirmed being registered in the provider device; and a third party device which can be connected to the network and can communicate with the user device and the provider device. In the credit guarantee system, when the provider device receives from the user device a notice of the third party device to which a guarantee notification for guaranteeing the credibility needs to be sent, the provider device issues to the third party device the guarantee notification to the effect that the credibility of the alias has been confirmed.
(2) In the above configuration (1), the alias includes first specific information uniquely assigned by the provider to the user.
(3) In the above configuration (1) or (2), the alias includes second specific information uniquely assigned by the provider to the alias.
(4) In any one of the above configurations (1) to (3), an application provided by the provider to use the credit guarantee system is installed in the user device, the application having unique identification information which is not made public; the user device notifies the provider device of authentication information containing the identification information when requesting the provider device for the guarantee notification; and the provider device issues the guarantee notification to the third party device if an authentication is cleared based on: the authentication information which the user device notified when requesting for the guarantee notification; and authentication information which includes the identification information and is registered in the provider device.
(5) In any one of the above configurations (1) to (4), confirming the credibility of the alias includes confirming an address of the user; and the guarantee notification guarantees that the address of the user who uses the alias has been confirmed.
(6) In any one of the above configurations (1) to (5), confirming the credibility of the alias includes confirming an identity of the user; and the guarantee notification guarantees that the identity of the user who uses the alias has been confirmed.
(7) In any one of the above configurations (1) to (6), at least one of a name, an address, an email address and a telephone number of the user is registered in the provider device; and when a request for the guarantee notification includes an order to present the at least one of the name, the address, the email address and the telephone number of the user to the third party, the provider device presents the at least one of the name, the address, the email address and the telephone number of the user when issuing the guarantee notification.
(8) In any one of the above configurations (1) to (7), the provider device is provided for each predetermined area; and the alias includes third specific identification uniquely assigned to the provider device that has registered the alias.
(9) In any one of the above configurations (1) to (8), when a change has occurred in contents of which credibility has been confirmed after the issuance of the guarantee notification, the provider device issues to the third party device which received the guarantee notification a notification to the effect that the change has occurred in the contents of which the credibility has been confirmed.

### Advantageous Effects of Invention

According to the present disclosure, it is possible to provide a credit guarantee system capable of giving trust to a the alias of a user who uses a network, and suppressing a situation in which a personal information or the like has to be disclosed.

### BRIEF DESCRIPTION OF DRAWINGS

FIG. 1 is a diagram for explaining a credit guarantee system of a first embodiment according to the present disclosure.
FIG. 2 is a block diagram of a provider device of the first embodiment according to the disclosure.
FIG. 3 is a diagram for explaining a user information file stored in a storage of the provider device of the first embodiment according to the disclosure.
FIG. 4 is a diagram for explaining main processes of the provider device of the first embodiment according to the disclosure.
FIG. 5 is a diagram showing exemplary contents that the provider device displays on a display of a user device when executing an initial registration process of the first embodiment according to the disclosure.
FIG. 6 is a diagram showing exemplary contents that the provider device displays on the display of the user device when executing a registration process using common first specific information of the first embodiment according to the disclosure.
FIG. 7 is a diagram showing an exemplary guarantee notification guaranteeing that a certain alias is used by a user who certainly has an actual address without disclosing personal information such as the user's real name or current address of the first embodiment according to the disclosure.
FIG. 8 is a diagram showing exemplary contents that the provider device displays on the display of the user device when executing a registered contents changing process of the first embodiment according to the disclosure.
FIG. 9 is a diagram for explaining a credit guarantee system of a second embodiment according to the disclosure.
FIG. 10 is a diagram for explaining a user information file stored in a storage of a provider device of the second embodiment according to the disclosure.
FIG. 11 is a diagram for explaining a credit guarantee system of a third embodiment according to the present disclosure.
FIG. 12 is a diagram for explaining main processes of a sub provider device of the third embodiment according to the disclosure.
FIG. 13 is a diagram for explaining main processes of a main provider device of the third embodiment according to the disclosure.

### DESCRIPTION OF EMBODIMENTS

Modes that embody the present invention (hereinafter referred to as embodiments) will be described in detail with reference to the attached drawings below.

Throughout the description of the embodiments, the same elements are denoted by the same reference numerals.

### (First embodiment)

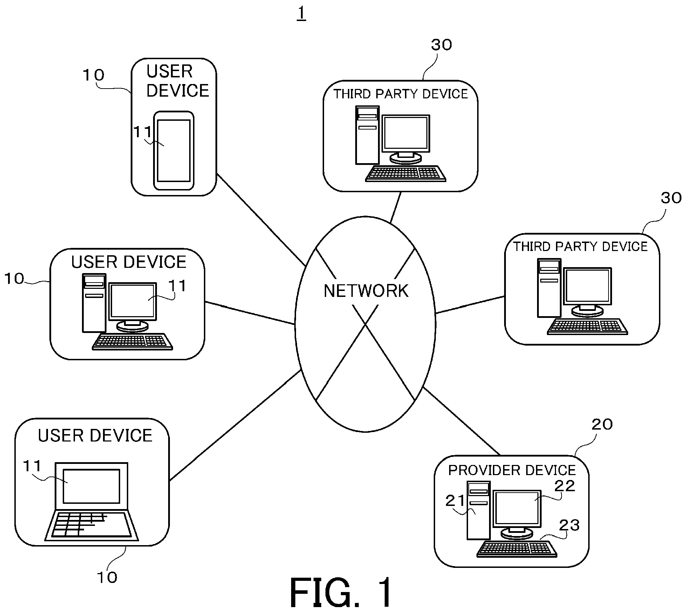

FIG. 1 is a diagram for explaining a credit guarantee system 1 of a first embodiment according to the present disclosure.

As shown in FIG. 1, the credit guarantee system 1 includes at least one user device 10, a provider device 20, and at least one third party device 30.

As shown in FIG. 1, the user device 10 is a device which can be connected to a network such as a desktop PC, a notebook PC or a smartphone, and is used by a user (such as an individual who is a natural person or a juridical person) who wants to use an alias.

The user devices 10 shown in FIG. 1 are merely examples, and may be, e.g., a tablet terminal or the like.

As shown in FIG. 1, the provider device 20 is a device which can be connected to a network such as a desktop PC, and is used by a provider that provides the credit guarantee system 1 to grant credit to the alias used by the user. More specifically, the credit guarantee system 1 is a system to grant credit to the alias used by the user where the provider confirms personal information of the user who uses the alias only to guarantee that the credibility of the alias has been confirmed.

In other words, the credit guarantee system 1 is not intended to handle events occurred in commercial transactions between the user and a third party such as transfer of money, giving of points of cash value, delivery of commodities and the like.

However, the provider device 20 shown in FIG. 1 is merely an example. For example, the provide device 20 may be any device such as a business server as long as the provider device 20 can execute processes described below.

The provider may be a single juridical person that provides the credit guarantee system 1, or may include a plurality of juridical persons or the like affiliated with each other to provide the credit guarantee system 1.

As shown in FIG. 1, the third party device 30 is a device such as a desktop PC that is used by the third party other than the users and the provider. The third party device 30 can connect to a network and communicate with the user device 10 and the provider device 20. For example, the third party is the other side of the user in a commercial transaction or the like.

However, the third party devices 30 shown in FIG. 1 are merely examples. Like the user devices 10, the third party devices 30 may be a notebook PC, a smart phone, a tablet terminal or the like.

Next, referring to FIGS. 1 to 3, the provider device 20 will be described in more detail, and the operation and the like of the credit guarantee system 1 will be described.

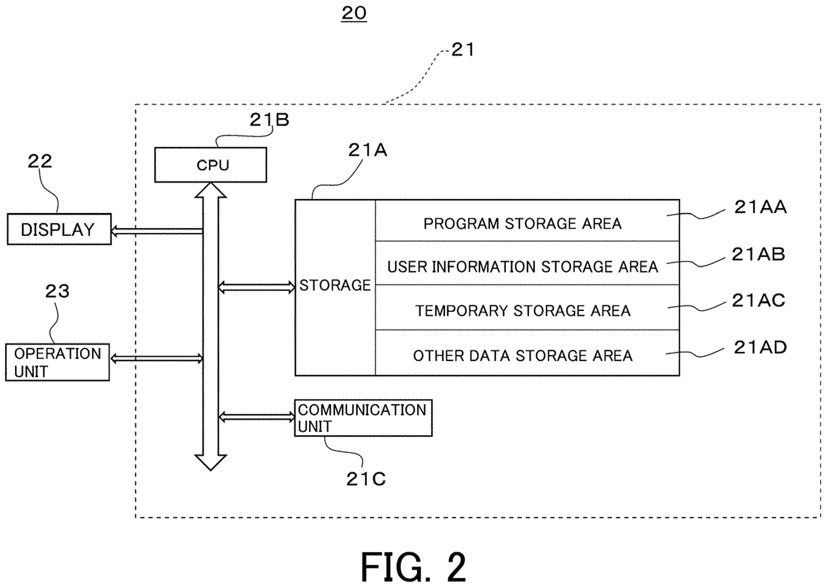

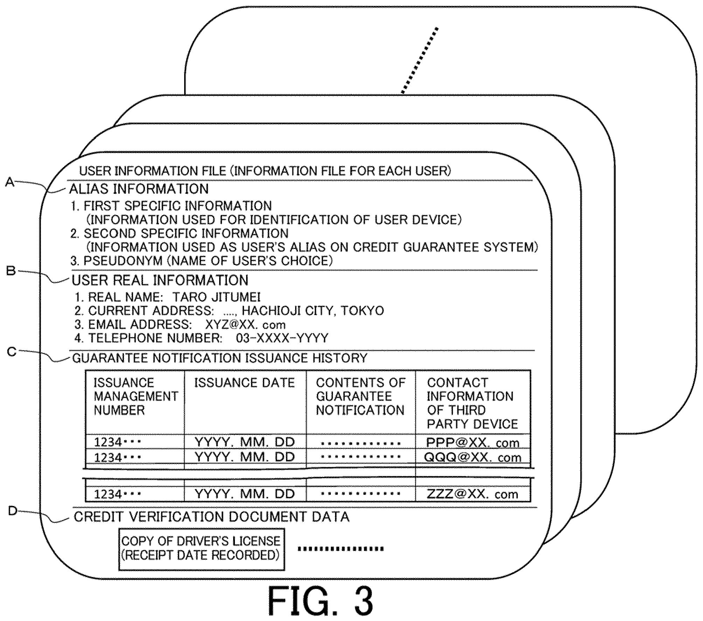

FIG. 2 is a block diagram of the provider device 20 of the first embodiment according to the disclosure. FIG. 3 is a diagram for explaining a user information file stored in a storage 21A of the provider device 20 of the first embodiment according to the disclosure.

As shown in FIGS. 1 and 2, the provider device 20 includes: a main body 21 that executes various processes; a display 22 that is communicably connected to the main body 21 to display various data; and an operation unit 23 that is used for various operations.

For example, as shown in FIG. 1, the display 22 is a liquid crystal monitor or the like, and the operation unit 23 is a keyboard, a mouse (not shown) or the like.

On the other hand, as shown in FIG. 2, the main body 21 includes: the storage 21A that includes, e.g., a ROM (Read Only Memory), a RAM (Random access memory) or the like to store programs, data and the like; a CPU 21B that executes various processes in accordance with the programs stored in the storage 21A to function as a control unit to perform overall control; a communication unit 21C that is used to communicate via a network; and a bus 21D that communicably connects the storage 21A, the CPU 21B and the communication unit 21C.

The display 22 and the operation unit 23 are also connected to connecting ports (not shown) of the main body 21 to be communicably connected to components (the storage 21A, the CPU 21B, the communication unit 21C and the like) of the main body 21 via the bus 21D.

As shown in FIG. 2, the storage 21A includes: a program storage area 21AA, a user information storage area 21AB, a temporary storage area 21AC and an other data storage area 21AD.

The program storage area 21AA is an area for storing various programs. For example, the program storage area 21AA stores programs and the like for enabling the provider device 20 to operate as the credit guarantee system 1.

The user information storage area 21AB stores at least one user information file of a user who wants to use an alias of which credibility has been confirmed in a manner described later.

Specifically, the user information file is a file that is created each time an alias of which credibility has been confirmed is registered. As shown in FIG. 3, the user information file includes: alias information A; user real information B; guarantee notification issuance history C; and credit verification document data D.

The alias information A includes: first specific information; second specific information; and a pseudonym.

The first specific information is identification information which the provider (the provider device 20) uses to identify the user (more precisely, the user device 10). The first specific information is unique data (a number, a code or the like) that the provider assigns to the user (the user device 10) when registering the user's alias as described below.

For example, the first specific information may be a MAC (Media Access Control) address assigned to each communicable device. The provider can assign the MAC address of the user device 10 as the first specific information, thereby giving information for identifying each user (more precisely, each user device 10).

The first specific information is provided to enable the provider (the provider device 20) to recognize that a plurality of aliases belongs to the same user in the case where the user wants to register the plurality of aliases.

However, the first specific information is not limited to the MAC address. The first specific information may be a unique ID that the provider itself issues for the user (more precisely, the user device 10).

The second specific information is information that is uniquely assigned by the provider to be used as the user's alias on the credit guarantee system 1. The second specific information is registered at the time of registration of the user alias as described later.

As mentioned above, an alias using the second specific information is given to the user to act as the user's name in place of the real name on the credit guarantee system 1. Hence, a pseudonym is not an essential requirement.

However, since the second specific information is unique information of an array of alphabets, numbers and the like, the second specific information may not be like a person's name. The pseudonym is provided for a user who wants to be called by a name like a person's name during transactions with providers or the like.

Thus, the pseudonyms are not used for identification of the users on the credit guarantee system 1. Therefore, even if a plurality of users has the same pseudonym, it causes no problems on the credit guarantee system 1. The user can register a pseudonym as his/her preferred name of his/her choice.

User real information B is real information of the user corresponding to the alias. As shown in FIG. 3, the user real information B includes: a real name, a current address, an email address, a telephone number and the like.

However, the user real information B may not include all of them. For example, the telephone number may not be included. Conversely, the user real information B may include other information (e.g. the date of birth).

When the user is not a natural person but a juridical person, the user real information B includes the name of the juridical person. The real name means here the name of a responsible person (the name of the representative) of the juridical person. The current address means a location (residence) of the juridical person which is registered in, e.g., a certified copy of the company registry of the Legal Affairs Bureau. The telephone number means a representative telephone number or the like of the juridical person.

These items registered in the user real information B have been confirmed by the provider based on credit verification documents that the user submitted to the provider for the credibility confirmation by the provider at the time of registration of the user's alias, which is described below.

As will be described later, the guarantee notification issuance history C is registered each time the provider issues a guarantee notification to a third party of the user's request upon receiving such request from the user, the notification guaranteeing that credibility of the alias of the user has been confirmed. The guarantee notification issuance history C is thus a history of records showing to which third parties the guarantee notifications have been issued.

The guarantee notification issuance history C includes a series of data of registration: an issuance management number that the provider assigns to each guarantee notification when issuing the guarantee notification to a third party; an issuance date when the guarantee notification is issued, contents of the guarantee notification (guarantee notification contents); and contact information of the third party to which the guarantee notification was issued to make contact with the third party. This series of registration contents is registered and accumulated every time the guarantee notification is issued.

The credit verification document data D is data of a document (including a copy of a document) submitted by the user to the provider at the time of registration of the user's alias described later, in order for the provider to confirm that the contents to be registered in the user real information B are correct. In other words, the credit verification document data D is the data of the credit verification document that the provider used to confirm the user's credibility.

For example, the credit verification document may be a driver's license, a health insurance certificate, a pension handbook, a passport, a resident register, a family register, an Individual Number card or the like. As shown in FIG. 3, the credit verification document data D is obtained by digitizing a document such as a driver's license, a passport, a resident register, a family register, an Individual Number card or the like used for confirming the credibility of the user (e.g. by converting such documents into PDF).

However, the credit verification document need not be limited to the above-mentioned documents and may be a contract or a mail regarding public utility charges or a receipt slip of a courier.

However, the credit verification document is preferably an identity verifiable document issued by public organizations in order to properly identify the user (e.g. a driver's license, a driver's history certificate, a health insurance certificate (an insured person certificate under public medical insurance), a physical disability certificate, a residence card, a special permanent resident certificate, a child rearing allowance certificate, a special child support allowance certificate, a pension handbook, a passport, a resident register, a family register, an Individual Number card or the like). The credit verification document data D is preferably a copy of the identity verifiable document issued by the public organizations that was used to confirm the credibility of the user (a copy in a PDF file of a driver's license, a passport, a resident certificate, a family register, an Individual Number Card or the like).

Generally in Japan, a driver's license, a health certificate, pension handbook, a passport, a resident register, a family register, an Individual Number card or the like can be exemplified as the identity verifiable document. Accordingly, it is considered that credit verification document data D are often a copy in a PDF file of a driver's license, a passport, a resident certificate, a family register, an Individual Number Card or the like, which were used to confirm the credibility of the user.

However, the users may reside in regions other than Japan. In this case, as a matter of course, such user who has an address outside Japan may submit a document that is generally used as an identity verifiable document in the country where the user resides. It should be noted that the above-mentioned credit verification documents (including the identify verifiable documents) are merely some examples.

Further, the user information file shown in FIG. 3 described above may include other data (not shown).

For example, as will be described later, in the present embodiment, when registering the alias of the user as described below, a dedicated application to use the credit guarantee system 1 is provided by the provider and is installed in the user device 10.

This application is designed to allow communication between the user device 10 and the provider device 20 using public key cryptography (a method that uses public and private key cryptography) to prevent compromise of information.

The application has identification information (also referred to as application identification information) uniquely assigned to the application which is not disclosed to anyone other than the provider. Although not shown in Fig. 3, this application identification information is also registered in the user information file.

How this application identification information is used by the provider will be described later.

The temporary storage area 21AC shown in FIG. 2 functions as a program development area when executing various programs stored in the program storage area 21AA. The temporary storage area 21AC also functions as an area to temporarily store data or the like generated in the execution of the programs.

The other data storage area 21AD shown in FIG. 2 is an area to store data or the like other than the data described above, which needs to be stored in the provider device 20.

In the above description, the storage 21A is incorporated in the main body 21 of the provider device 20. However, the storage 21A may include an external storage device connected to the provider device 20.

Further, the storage 21A may also include an external storage device located remotely from the provider device 20 in a manner that the provider device 20 can access, e.g., via a network.

When the storage 21A thus includes such external storage device, the contents, which are expected to be a large amount of data, can be stored not only in the user information storage area 21AB but also in the external storage device having a large storage capacity, thereby improving the operation speed of the provider device 20.

When employing the external storage device, it is needless to say that the number of the external storage device may not be one, but a plurality of external storage devices may be provided.

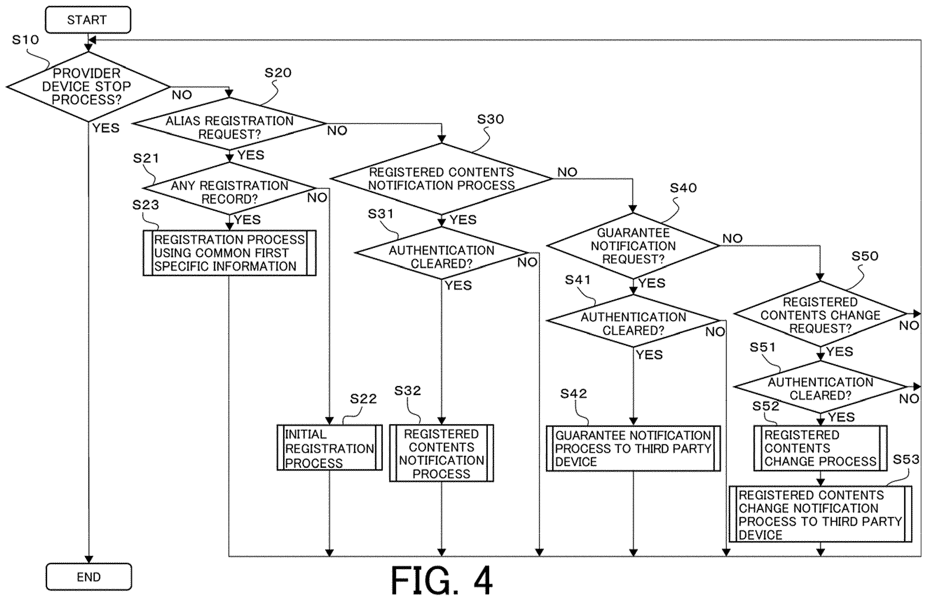

Next, referring mainly to FIG. 4, the general flow and the like of the credit guarantee system 1 will be described.

FIG. 4 is a diagram for explaining the main processes of the provider device 20 of the first embodiment according to the disclosure.

When the provider device 20 receives an operation instruction to function as the credit guarantee system 1 through an operation by the provider, the processing shown in FIG. 4 is started.

Since a CPU 21B of the provider device 20 functions as a control unit in cooperation with the programs, the subject of the processing is the CPU 21B. Still, since the processing is executed as the function of the provider device 20, the processing will be described below with the provider device 20 as the subject of the processing.

As shown in FIG. 4, on receiving the instruction to operate as the credit guarantee system 1, the provider device 20 starts the processing and executes a monitor loop processing to monitor that any one of steps S10, S20, S30, S40 and S50 is determined Yes.

When receiving a provider device stop process (Step S10: YES) through an operation by the provider, the provider device ends the processing.

For example, the provider operates such that the determination is YES in Step S10, when the processing as the credit guarantee system 1 of the provider device 20 needs to be stopped for maintenance work or the like, or when the credit guarantee system 1 is outside business hours.

Although one example above is the case where the credit guarantee system 1 is outside business hours, the business hours may not be necessarily provided. The credit guarantee system 1 may be in operation for 24 hours a day, 365 days a year except for maintenance work time.

On the other hand, when the user operates the user device 10 to access a site of the credit guarantee system 1 run by the provider device 20 or to directly access a server to request a registration of an alias, the provider device 20 receives an alias registration request (Step S20: YES). Then, the processing proceeds to Step S21 where the provider device 20 determinates whether the user already has at least one alias registration record.

In the credit guarantee system 1 of the present embodiment, one user can register a plurality of aliases. If the user has at least one alias registration record, the credibility of the user has already been confirmed for registration, so that a registration process is executed correspondingly (Step S23 described below). Also in the case of a new user, a registration process is executed correspondingly (Step S22 described below). For this reason, the determination whether or not the user has at least one registration record is made.

The determination of the presence or absence of a registration record in Step S21 will be explained more specifically. As discussed above with reference to FIG. 3, the user information file includes the first specific information registered for use in identifying the user device 10.

For example, as described above, in the case where the provider assigns the MAC address as the first specific information, packets sent by a communicable device always include the MAC address, so that the provider device 20 accepts (receives) the MAC address included in the alias registration request (also referred to as a transmitted MAC address). The provider collates the transmitted MAC address with the MAC address registered in each user information file in the user information storage area 21AB (also referred to as a registered MAC address).

If at least one user information file including the registered MAC address same as the transmitted MAC address is found in the user information storage area 21AB, the provider device 20 determines that the user has at least one registration record (Step S21: YES), and proceeds to the process in Step S23.

On the other hand, if no user information file including the registered MAC address same as the transmitted MAC address is found in the user information storage area 21AB, the provider device 20 determines that the user has no registration record (Step S21: NO), and proceeds to the process in Step S22.

As mentioned above, in the present embodiment, the dedicated application for utilizing the credit guarantee system 1 provided by the provider is installed in the user device 10 at the registration of the user alias described below. The dedicated application sends the provider device 20 the application identification information when communicating with the provider device 20.

The application can also be operated to register a new alias. When the user submits an alias registration request using this application, the provider device 20 receives the application identification information. The provider device 20 may conduct the determination in Step S21 based on whether or not any user information file in the user information storage area 21AB includes the same application identification information.

However, even in the case where the alias registration request is submitted using the dedicated application, the provider device 20 also receives the MAC address. Hence, it is needless to say that even if the alias registration request is submitted using the dedicated application, the determination in Step S21 may be conducted based on the MAC address.

When the determination in Step S21 is NO, the provider device 20 proceeds to Step S22, where an initial registration process is conducted for the new user.

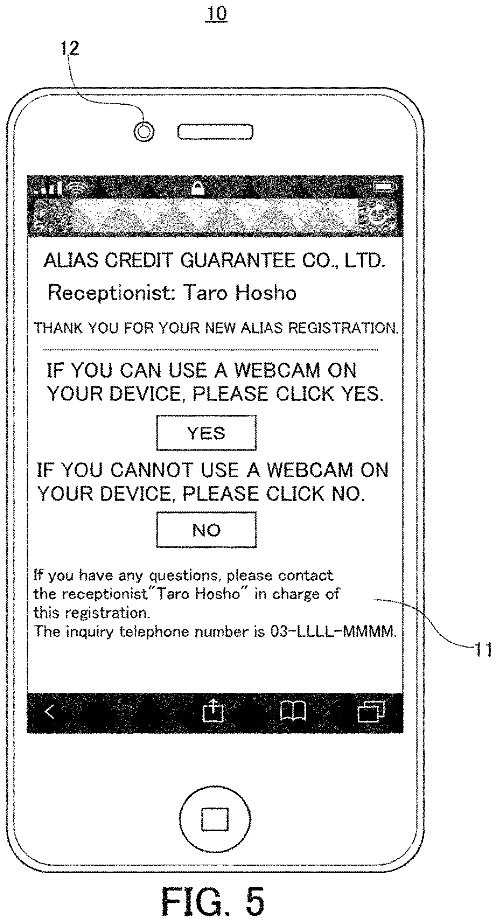

FIG. 5 is a diagram showing exemplary contents that the provider device 20 displays on the display 11 (a screen) of the user device 10 when executing the initial registration process (Step S22).

FIG. 5 shows an example where the user device 10 is a smartphone that can be used as a webcam 12.

That is, it is assumed in this explanation that an application to transmit a video to and from a remote device has already been installed in the smartphone.

However, since recent personal computer devices are originally equipped with a webcam 12, the user device 10 may be any one of such devices.

When the determination in Step S21 is NO, the provider device 20 displays a guidance for a registration of a new alias on the display 11 (the screen) of the user device 10, as shown in FIG. 5.

In FIG. 5 where the user device 10 is a smartphone that can use a webcam 12, when the user clicks (touches) "Yes" on the display 11 of the user device 10, the webcam 12 is connected to a receptionist (Taro Guarantee).

More specifically, a screen or the like to inquire the IP address and the like for establishing a connection is displayed. When the inputs are completed, the webcam 12 is connected to the receptionist (Taro Guarantee).

If the user device 10 cannot work as a webcam 12, so that the user selects "NO", the display 11 of the user device 10 shows how to conduct the registration of a new alias without using a webcam 12.

As ways for the new alias registration without using a webcam 12, a nearest shop available for the new alias registration (including a shop that is a partner company of the business capable of handling applications by a user) may be introduced, or a visit to the user's home by the receptionist (Taro Guarantee) may be offered.

As another way for the new alias registration without using a webcam 12, when a mail company or a courier company is a partner company of the business, a visit to the user's home by such company (the mail company or the courier company) may be offered.

Returning to the case where the webcam 12 is connected to the receptionist, the new alias registration proceeds in accordance with instructions by the receptionist.

Firstly, the receptionist confirms what kind of guarantee the user wants to receive.

If the user wants the provider to guarantee that the user has a real address, the receptionist prompts the user to show a document (the credit verification document) capable of proving at least the user's real address on the webcam 12. The receptionist then acquires the data of the document (the credit verification document) shown on the webcam 12 as the credit verification document data (e.g. PDF).

At this time, the receptionist may acquire a photograph of the user shown on the webcam 12.

In the present embodiment, the receptionist instructs the user through the webcam 12. However, in place of the receptionist, an image analysis program (a face recognition program or the like) that analyzes images shown on the webcam 12 and audio guidance may be used as unmanned reception.

When the credit verification document does not contain a photograph of the user, data of two or more different documents may be acquired in order to secure the credibility of the documents.

For example, in the case where the credit verification document is a resident register, a health insurance certificate may be also acquired together with the resident register as a document other than the resident register which shows the real name of the user same as that written on the resident register.

In the case where the user wants the provider to guarantee the identity of the user to a third party, the receptionist prompts the user to show on the webcam 12, as the credit verification document, the identity verifiable document i.e. a document capable of verifying at least the identity of the user (e.g. any of a driver's license, a driver's history certificate, a passport, an Individual Number card, a physical disability certificate, a residence card, a special permanent resident certificate, an employee ID card, a student ID card, a health insurance certificate (an insured person certificate under public medical insurance), a pension handbook, a child rearing allowance certificate or a special child support allowance certificate). The receptionist then acquires the data of the document (the credit verification document) on the webcam 12 as the credit verification document data (e.g. PDF).

Also in this case, when the identify verifiable document does not contain a photograph of the user, data of two or more different documents may be acquired in order to secure the credibility of the documents.

In this manner, when the acquisition of the credit verification document data and the confirmation of the user's credibility are completed, the receptionist operates the provider device 20 to send the dedicated application which enables the user device 10 to use the credit guarantee system 1. In addition, the receptionist registers a user information file for this user in the user information storage area 21AB. Further, the receptionist sends the user the terms of service of the provider regarding the personal information of the user registered in the user information file.

In this manner, when the initial registration process (Step S22) is completed, the provider device 20 executes the monitor loop process again.

Although not shown in FIG. 4, when completing the initial registration process (Step S22), the provider device 20 transmits the data to the user device 10 before returning to the monitor loop processing such that the user can confirm the contents of the registered user information file.

For example, the provider device 20 transmits to the user device 10: the second specific information and the pseudonym of the alias information A; the contents of the user real information B; and the names of the documents stored (registered) as the credit verification document data D of the user information file.

If the user requests to register a pseudonym when asked by the receptionist what the guarantee is for, the pseudonym is registered in the user information file. If the user does not request, the user's pseudonym is not registered.

Optionally, the receptionist may briefly explain to the user how to install or how to use the dedicated application during the initial registration process (Step S22) via the webcam 12. The receptionist may also orally explain the terms of service of the provider regarding the personal information of the user registered in the user information file.

On the other hand, if the determination in Step S21 is YES, the provider device 20 proceeds to Step S23 where the provider device 20 executes a registration process using common first specific information for the user having at least one alias registration record. Then, the provider device 20 executes the monitor loop processing again.

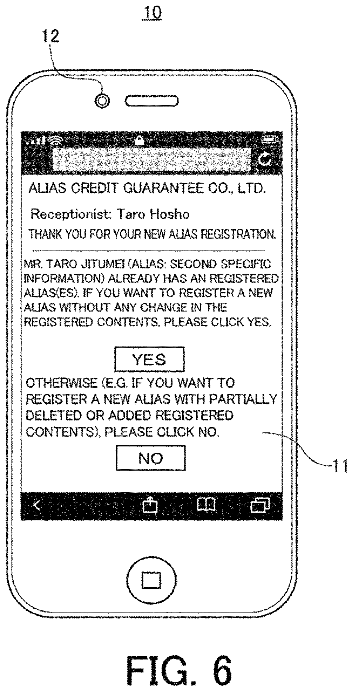

FIG. 6 is a diagram showing exemplary contents that the provider device 20 displays on the display 11 (the screen) of the user device 10 when executing the registration process using common first specific information (Step S23).

As shown in FIG. 6, if the determination in Step S21 is YES, the provider device 20 displays, on the display 11 (the screen) of the user device 10, guidance for the case where the user has at least one alias registration record.

When the user clicks (touches) "YES" on the display 11 of the user device 10, the provider device 20 registers, in the user information storage area 21AB, a user information file containing the same contents as previously registered i.e. the first specific information and the pseudonym of the alias information A, the user real information B, and the credit verification document data D as well as new second specific information. Then, the provider device 20 returns to the monitor loop processing again.

In this case, since no guarantee notification has been issued to a third party for the alias using the new second specific information, its guarantee notification issuance history C is blank as a matter of course.

Although not shown in FIG. 4, as in the initial registration process (Step S22) above, when completing the registration process using common first specific information (Step S23), the provider device 20 transmits the data to the user device 10 before returning to the monitor loop processing such that the user can confirm the contents of the registered user information file.

That is, for example, the provider device 20 transmits to the user device 10: the second specific information and the pseudonym of the alias information A; the contents of the user real information B; and the names of the documents stored (registered) as the credit verification document data D of the user information file.

In the case of the registration process using common first specific information (Step S23), the dedicated application is not sent because the dedicated application, which is provided by the provider to enable the use of the credit guarantee system 1, is already installed in the user device 10.

On the other hand, when the user clicks (touches) "NO" on the display 11 of the user device 10 in the display on the screen shown in FIG. 6, the provider device 20 displays the same screen as shown in FIG. 5 on the display 11 of the user device 10. In the screen, the user clicks "YES" when the webcam 12 is available on the user device 10 or clicks "NO" when the webcam 12 is not available on the user device 10.

For example, when the user clicks "Yes", the webcam 12 is connected to the receptionist as described above. The receptionist asks the user whether the previously registered contents need to be changed. If so, the previously registered contents are changed. A new user information file is registered in the user information storage area 21AB with the changed contents and new second specific information.

However, even in this case, the first specific information of the alias information A remains unchanged, since the first specific information is the information for identifying the user device 10. The first specific information is registered unchanged from the previous registration.

When additional credit verification document data needs to be registered or the existing credit verification document data needs to be deleted in accordance with the change, such process is also conducted as a matter of course.

On the other hand, as in the initial registration process (Step S22), when the user clicks "NO", ways for registering an alias without using a webcam 12 are presented. For example, a nearest shop available for the registration of an alias (including a shop that is a partner company of the business capable of handling applications by a user) may be introduced, or a visit to the user's home by the receptionist may be offered.

As described above, the alias of the user of which credibility has been confirmed is registered in the provider device 20.

Next, a registered contents inquiry request (Step S30) for confirming the registered contents of the user information file will be described. When the user operates the user device 10 to submit the inquiry request to the provider device 20 (Step S30: YES), the provider device 20 receives the request and firstly conducts an authentication determination (Step S31) as shown in FIG. 4.

The registered contents inquiry request (Step S30) is submitted using the dedicated application installed in the user device 10. When this request is submitted, the dedicated application sends the provider device 20 authentication information containing the unique identification information (the dedicated application identifying information) that is assigned for the dedicated application and is open only to the provider.

Therefore, the provider device 20 conducts the authentication based on: the authentication information including the dedicated application identifying information that is sent to the provider device 20 from the user device 10 (the installed dedicated application) when submitting the registered contents inquiry request (Step S30); and authentication information including the dedicated application identifying information that is registered in the provider device 20. When the authentication is cleared (Step S31: YES), the processing proceeds to Step S32 where a registered contents notification process of notifying the user device 10 of the registered contents is executed (Step S32). Then, the provider device 20 returns to the monitor loop processing again.

Specifically, when the registered contents inquiry request (Step S30) is submitted from the user device 10 to the provider device 20, the user device 10 transmits, as the authentication information, the above-explained dedicated application identifying information and the second specific information to the provider device 20. The provider device 20 receives them and refers to the user information file containing that second specific information in the user information storage area 21AB to confirm whether the transmitted dedicated application identifying information coincides with the dedicated application identifying information registered in that user information file. If they coincide with each other, it is determined that the authentication is cleared (Step S31: YES). If they do not coincide with each other, it is determined that the authentication is not cleared (Step S31: NO).

Note that the MAC address (the transmitted MAC address) of the user device 10 is also sent from the user device 10 during transmission of data packets, since the MAC address is included in the packets sent from the user device 10. Hence, for example, the provider device 20 may use the dedicated application identifying information and the transmitted MAC address and refer to the user information file containing the transmitted MAC address in the user information storage area 21AB to confirm whether the transmitted dedicated application identifying information coincides with the dedicated application identifying information registered in that user information file.

However, in this case, if the user has more than one registered alias, more than one user information file is found. When more than one user information file is found, the provider device 20 narrows the found user information files using the second specific information to determine whether the transmitted dedicated application identifying information coincides with the dedicated application identifying information registered in the resultant user information file.

When the authentication is not cleared (Step S31: NO), the provider device 20 sends the user device 10 contact information of a person in charge of the provider (e.g. an inquiry telephone number) to prompt the user to contact the person in charge of the provider (not shown in FIG. 4). On the other hand, when the authentication is cleared (Step S31: YES), it has been confirmed that the inquiry request is from a legitimate user. Hence, the provider device 20 executes the registered contents notification process (Step S32) to notify the user device 10 of the registered contents. Then, the provider device 20 returns to the monitor loop processing again.

This registered contents notification process (Step S32) to notify the user device 10 of the registered contents is executed in accordance with the request from the user device 10.

For example, if the inquiry request is for the whole registered contents, the second specific information and the pseudonym of the alias information A; all the contents of the user real information B; all the contents of the guarantee notification issuance history C; and all the contents of the credit verification document data D are sent to the user device 10 over the network.

The first specific information of the alias information A is not sent, because the first specific information may be used as security-related information as described above.

On the other hand, when the inquiry request is only for the alias information A, the second specific information and the pseudonym of the alias information A are sent to the user device 10 over the network. When the inquiry request is for the user real information B, all the contents of the user real information B are sent to the user device 10 over the network.

When the inquiry request is for a part of the user real information B such as the telephone number or the email address, the telephone number or the email address of the user real information B alone is sent to the user device 10 over the network.

Next, when the user operates the user device 10, e.g., to submit a guarantee notification request to the provider device 20 (Step S40), the determination in Step S40 is YES, and the provider device 20 proceeds to Step S41.

That is, when the provider device 20 receives a notice of a third party device 30 to which the user needs to send a guarantee notification guaranteeing the credibility of the user (the provider device 20 receives contact information of the third party device 30), the provider device 20 executes a guarantee notification process (Step S42) where a guarantee notification to the effect that the credibility of the user's alias has been confirmed is issued to the third party device 30. However, as described above, the provider device 20 firstly conducts the authentication to confirm whether the guarantee notification request is from a legitimate user. When the authentication is cleared (Step S 41: Yes), the provider device 20 executes the guarantee notification process (Step S42).

Since this authentication is similar to that previously described, the explanation here will be simplified. The guarantee notification request (Step S40) is submitted through the dedicated application installed in the user device 10. When this request is submitted, the dedicated application sends the provider device 20 the authentication information containing the unique identification information (the dedicated application identifying information) that is assigned for the dedicated application and is open only to the provider.

Therefore, the provider device 20 conducts the authentication based on: the authentication information including the dedicated application identifying information that is sent to the provider device 20 by the user device 10 (the installed dedicated application) when submitting the guarantee notification request (Step S40); and the authentication information including the dedicated application identifying information that is registered in the provider device 20. When the authentication is cleared (Step S41: YES), the provider device 20 executes the guarantee notification process (Step S42), and issues the guarantee notification to the effect that the user's alias has been confirmed to the third party device 30. Then, the provider device 20 returns to the monitor loop processing again.

Specifically, when the guarantee notification request (Step S40) is submitted from the user device 10 to the provider device 20, the user device 10 transmits, as the authentication information, the above-explained dedicated application identifying information and the second specific information to the provider device 20. The provider device 20 receives them and refers to the user information file containing the second specific information in the user information storage area 21AB to confirm whether the transmitted dedicated application identifying information coincides with the dedicated application identifying information registered in that user information file. If they coincide with each other, it is determined that the authentication is cleared (Step S41: YES). If they do not coincide with each other, it is determined that the authentication is not cleared (Step S41: NO).

When it is determined that the authentication is not cleared (Step S41: NO), the provider device 20 transmits the user device 10 the contact information of a person in charge of the provider (e.g. the inquiry telephone number) to prompt the user to contact the person in charge of the provider (not shown in FIG. 4). On the other hand, when the authentication is cleared (Step S41: YES), it has been confirmed that the guarantee notification request is from a legitimate user. Hence, the provider device 20 executes the guarantee notification process (Step S42) to issue the guarantee notification to the third party device 30. Then, the provider device 20 returns to the monitor loop processing again.

This guarantee notification process (Step S42) to issue the guarantee notification to the third party device 30 is executed in accordance with the request from the user device 10.

For example, in the case where only the credibility of the user's address was confirmed at the time of registration, if the request from the user device 10 is for the guarantee notification to be issued to the third party device 30 guaranteeing that the user's alias is certainly used by the user who has an actual address, the guarantee notification is issued without disclosing personal information such as the user's real name or current address.

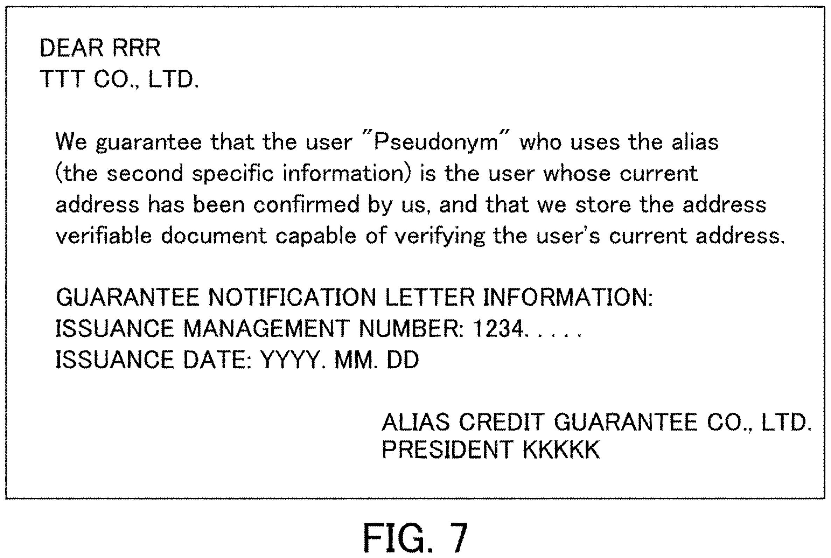

FIG. 7 is a diagram showing an exemplary guarantee notification which guarantees that a certain alias is used by a user certainly having an actual address without disclosing personal information such as the user's real name or current address. In other words, FIG. 7 is an exemplary guarantee notification letter attached to the guarantee notification issued by the provider device 20 to the third party device 30 over the network.

However, the guarantee notification itself may not contain any message or the like, so that the guarantee notification issuance may only contain a process of sending the guarantee notification letter. The guarantee notification may simply mean sending the guarantee notification letter.

In FIG. 7, the name of a person who uses the third party device 30 is "RRR" of "TTT Co., Ltd."

The provider device 20 may issue the guarantee notification in accordance with templates prepared in advance in the provider device 20.

As shown in FIG. 7, in this case, the guarantee notification letter is sent to the third party device 30, which guarantees that the alias is used by the user whose address has been confirmed in the credibility confirmation conducted by the provider, and whose address verifiable document is stored by the provider.

In the guarantee notification letter, an electronic signature i.e. a guarantee signet of the provider, Alias Credit Guarantee Co., Ltd., is also attached.

Fig. 7 shows the case of the user who has a pseudonym registered in the alias information A. However, when the pseudonym is not registered, the portion of "pseudonym" is to be deleted from the letter.

However, since FIG. 7 is merely an example, the sentence "We guarantee that the user "Pseudonym" who uses the alias (the second specific information) is the user whose current address has been confirmed by us, and that we store the address verifiable document capable of verifying the user's current address." may be replaced by a design (an icon) that indicates the guarantee by the provider. Also in this case, the electronic signature i.e. the guarantee signet of the provider, Alias Credit Guarantee Co., Ltd., is attached in the guarantee notification letter.

On the other hand, for example, in the case where only the identity of the user was confirmed at the time of registration, if the request from the user device 10 is for the guarantee notification to be issued to the third party device 30 guaranteeing the third party device 30 that the user's alias is certainly used by the user whose identity has been confirmed by the provider, the guarantee notification is issued without disclosing personal information such as the user's real name or current address.

In this case, the text of the guarantee in FIG. 7 may be "We guarantee that the user "Pseudonym" who uses the alias (the second specific information) is the user whose identity has been confirmed by us, and that we store the identity verifiable document capable of verifying the user's identity."

Also in this case, the text "We guarantee that we have confirmed the user "Pseudonym" who uses the alias (the second specific information) is a user whose identity has been confirmed, and that we store its identity verifiable document capable of verifying the user's identity." may be replaced by the design (the icon) that indicates the guarantee by the provider.

Some third parties may request for a presentation of the address verifiable document or the identity verifiable document. An example is the case where: the request (for the guarantee notification) from the user device 10 is for issuing a guarantee notification guaranteeing that the address of the user using the alias has been confirmed; and the user orders, in the request (for the guarantee notification), the provider (the provider device 20) to also present, to the third party 30, the address verifiable document that was submitted by the user for the credibility confirmation by the provider and is registered in the provider device 20 when issuing the guarantee notification. In this case, when issuing the guarantee notification, the provider device 20 sends the address verifiable document ordered in the request (for the guarantee notification) from the user device 10 for presentation in addition to the guarantee notification letter shown in FIG. 7.

Another example is the case where: the request (for the guarantee notification) from the user device 10 is for issuing a guarantee notification guaranteeing that the identity of the user using the alias has been confirmed; and the user orders, in the request (for the guarantee notification), the provider (the provider device 20) to also present, to the third party 30, the identity verifiable document that was submitted by the user for the credibility confirmation by the provider and is registered in the provider device 20, when issuing the guarantee notification. In this case, when issuing the guarantee notification, the provider device 20 sends the identity verifiable document ordered in the request (for the guarantee notification) from the user device 10 for presentation in addition to the guarantee notification letter.

Another example is the case where: the request (for the guarantee notification) from the user device 10 includes an order to the provider (the provider device 20) to present, to the third party 30, any of the user's name (real name), address, email address and telephone number when issuing the guarantee notification. In this case, the provider device 20 presents the ordered one(s) of the user's name (real name), address, email address and telephone number when issuing the guarantee notification guaranteeing the credibility of the user's alias (the second specific information) has been confirmed.

In this case, for example, the ordered contents (out of the user's name (real name), address, email address and telephone number) may be added as part of the guarantee notification letter shown in FIG. 7.

As described above, the provider device 20 executes the guarantee notification process of issuing the guarantee notification to the third party device 30 (Step S42). Then, the provider device 20 returns to the monitor loop processing again. As explained above, prior to returning to the monitor loop processing, the provider device 20 makes a record of the issued guarantee notification in the guarantee notification issuance history C of the user information file, although not shown in FIG. 4.

Next, when the user operates the user device 10, e.g. to submit a request for change in registered contents to the provider device 20 (Step S50), the determination in Step S50 is YES, and the provider device 20 proceeds to Step S51.

When receiving the registered contents change request from the user device 10 (Step S50), the provider device 20 executes a registered contents change process for changing the registered contents of the user information file (Step S52). As described above, the provider device 20 firstly conducts the authentication to confirm whether the registered contents change request is from a legitimate user. When the authentication is cleared (Step S51: Yes), the provider device 20 executes the registered contents change process (Step S52).

Since this authentication is similar to that previously described, the explanation here will be simplified. The registered contents change request (Step S50) is submitted through the dedicated application installed in the user device 10. When this request is submitted, the dedicated application sends the provider device 20 the authentication information containing unique identification information (the dedicated application identifying information) that is assigned for the dedicated application and is open only to the provider.

Therefore, the provider device 20 conducts the authentication based on: the authentication information including the dedicated application identifying information that is sent to the provider device 20 by the user device 10 (the installed dedicated application) when submitting the registered contents change request (Step S50); and the authentication information including the dedicated application identifying information that is registered in the provider device 20. When the authentication is cleared (Step S51: YES), the registered contents change process (Step S52) is executed.

Specifically, when the registered contents change request (Step S50) is submitted from the user device 10 to the provider device 20, the user device 10 transmits, as the authentication information, the above-explained dedicated application identifying information and the second specific information to the provider device 20. The provider device 20 receives them and refers to the user information file containing the second specific information in the user information storage area 21AB to confirm whether the transmitted dedicated application identifying information coincides with the dedicated application identifying information registered in that user information file. If they coincide with each other, it is determined that the authentication is cleared (Step S51: YES). If they do not coincide with each other, it is determined that the authentication is not cleared (Step S51: NO).

When it is determined that the authentication is not cleared (Step S51: NO), the provider device 20 transmits the user device 10 the contact information of a person in charge of the provider (e.g. the inquiry telephone number) to prompt the user to contact the person in charge of the provider (not shown in FIG. 4). On the other hand, when the authentication is cleared (Step S51: YES), it has been confirmed that the registered contents change request is from the legitimate user. Hence, the provider device 20 executes the registered contents change process (Step S52)

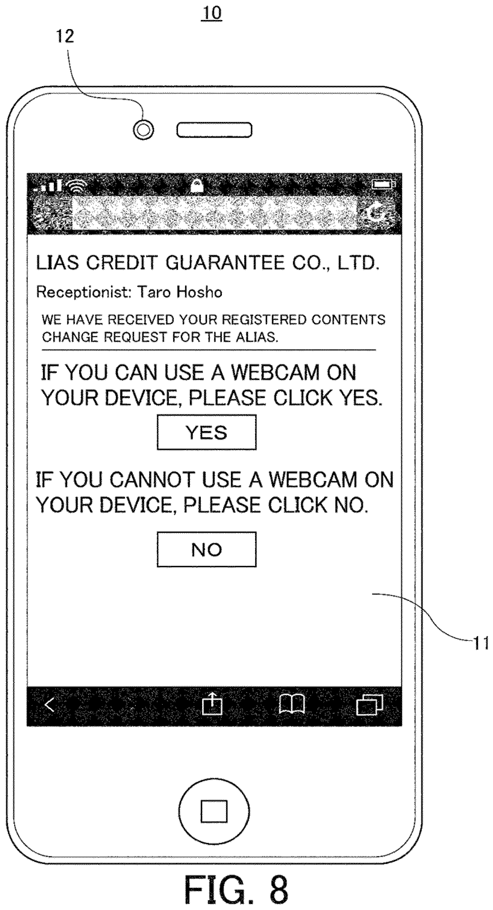

FIG. 8 is a diagram showing exemplary contents that the provider device 20 displays on the display 11 (the screen) of the user device 10 when executing the registered contents change process (Step S52).

As shown in FIG. 8, if the determination in Step S51 is YES, the provider device 20 displays, on the display 11 (the screen) of the user device 10, guidance for the case where the registered contents are to be changed.

When the user clicks (touches) the "Yes" on the display 11 of the user device 10, the webcam 12 is connected to the receptionist as described above. The receptionist asks the user what kind of change the user wants to make in the registered contents. The receptionist then reflects the change in the user information file registered in the user information storage area 21AB.

In accordance with the change, the credit verification document data is also changed, when necessary.

On the other hand, when the user clicks "NO", as ways for the new alias registration without using a webcam 12, a nearest shop available for the new alias registration (including a shop that is a partner company of the business capable of handling applications by a user) may be introduced, or a visit to the user's home by the receptionist (Taro Guarantee) may be offered.

In this manner, when the registered contents change process (step S52) is completed, the provider device 20 then executes a registered contents change notification process (step S53) to third party device 30 and returns to the monitor loop processing again.

The registered contents change notification process (S53) is a process where the provider device 20 refers to the guarantee notification issuance history C of the user information file to find a third party device 30 that previously received the guarantee notification containing the contents concerning the current change, notifying the third party of the occurrence of the change.

An example is the case where the change has been made on the telephone number; and the guarantee notification (the guarantee notification letter attached to the guarantee notification) previously issued to the third party device 30 presents the contents guaranteeing that the telephone number is registered or presents the telephone number at the user's request. The provider device 20 issues to the third party device 30 the registered contents change notification to the effect that the telephone number has been changed.

However, the registered contents change notification does not disclose the changed telephone number, which is personal information. The registered contents change notification simply notifies the third party that the telephone number, which differs from the telephone number at the time of the previous guarantee notification, has been registered, and prompts the third party to request the user to have the provider issue a new guarantee notification to the third party.

In this manner, when a change has occurred in the user's credibility-confirmed contents after the issuance of the guarantee notification to the third party device 30, the provider device 20 issues a notification to the third party device 30 that previously received the guarantee notification, to inform that a change has occurred in the credibility-confirmed contents (the registered contents change notification process (Step S53)). Then, the provider device 20 returns to the monitor loop processing again.

According to the credit guarantee system 1 of the present embodiment as described above, the user can conduct a commercial transaction or the like with a third party without disclosing personal information such as the user's real name only by receiving credit guarantee on the alias from the provider.

On the other hand, the personal information or the like designated by the user is presented to the third party on the user's request, so that the commercial transaction or the like can be smoothly advanced.

Although the above explanation has been made mainly with commercial transactions in mind, the credit guarantee system 1 is not only for the commercial transactions since aliases may need to receive credit guarantee in situations other than the commercial transactions.

### (Second embodiment)

Next, a credit guarantee system 1 of a second embodiment will be described.

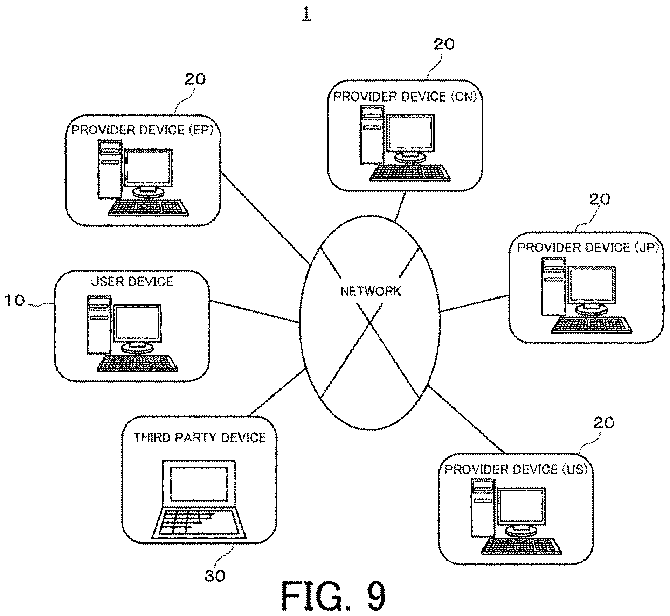

FIG. 9 is a diagram for explaining the credit guarantee system 1 of the second embodiment according to the present disclosure.

The credit guarantee system 1 of the second embodiment is similar to the credit guarantee system 1 of the first embodiment in many respects. Hence, the following description mainly covers the different points from the first embodiment, and the description of the same points may be omitted.

As shown in FIG. 9, the credit guarantee system 1 of the present embodiment includes a plurality of provider devices 20, each provider device provided for a predetermined region.

In FIG. 9, Europe (e.g. European Union (EU)), China (CN), Japan (JP), and the United States (US) are set as the predetermined regions, but the present disclosure is not limited thereto. For example, the provider device 20 may be provided for each of predetermined regions set in Europe. The united states may be divided into a plurality of regions, and the provider device 20 may be provided for each of the regions.

The provider device 20 provided for each region is in charge of the region and executes the same processes as those described in the first embodiment.

The configuration of the provider device 20 is the same as that of the provider device 20 of the first embodiment described above referring to FIG. 2.

On the other hand, since the plurality of provider devices 20 exist, the present embodiment has an additional item in the user information file described in the first embodiment.

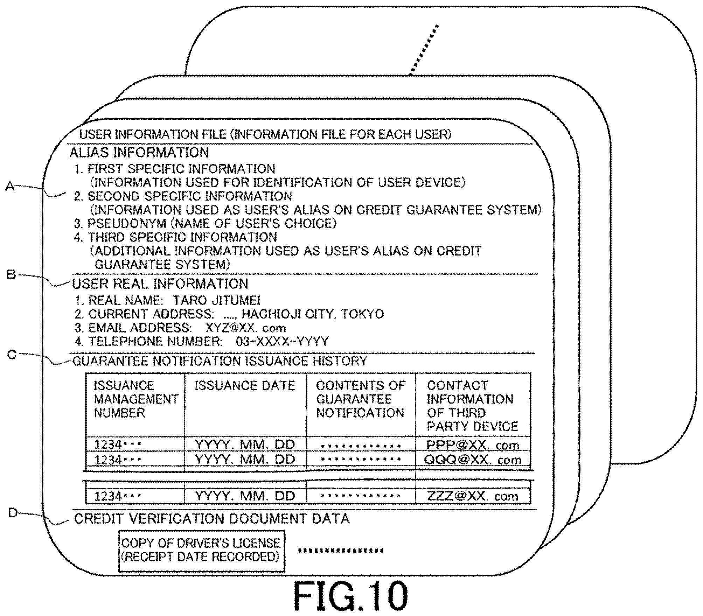

FIG. 10 is a diagram for explaining a user information file stored in the storage 21A of the provider device 20 of the second embodiment according to the disclosure.

As can be seen from the comparison of FIG. 3 and FIG. 10, third specific information is added to the alias information A in the user information file of the second embodiment shown in FIG. 10.

The third specific information is unique information specific to each provider device 20. The user information file shown in Fig. 10 is created by each provider device 20 that executes the alias registering process. Hence, the third specific information unique and specific to the provider device 20 that executed the alias registering process is registered in each user information file.

This third specific information is used in the alias in the cases where aliases need to be identified between the provider devices 20.

Specifically, in the first embodiment, the second specific information is used as an alias as it is. On the other hand, in the present embodiment, an alias is the second specific information when being handled only in one provider device 20, while an alias consists of: the second specific information; and the third specific data added to the head of the second specific information when being handled between the provider devices 20. In other words, the aliases include not only the second specific information but also the third specific information.

It is needless to say that the aliases may include the second specific information and the third specific information also when being handled in the same provider device 20.

In this manner, the third specific information is the additional information used for users' aliases on the credit guarantee system 1. By arranging so, the uniqueness of each aliases can be ensured between the provider devices 20, even if the same aliases (the second specific information) exist on the provider devices 20.

However, the third specific information may not be an essential requirement, even when the plurality of provider devices 20 exist.

For example, the second specific information may be set unique between the provider devices 20 when executing the alias registration process, thereby eliminating the necessity of the third specific information.

The credit guarantee system 1 of the present embodiment as described above can achieve the same advantages as those of the first embodiment.

Further, since the provider device 20 is provided for each predetermined region in the credit guarantee system 1 of the present embodiment, it is easy to provide fine-tuned support for each region. In addition, if any provider device 20 is stopped for maintenance or the like, another provider device 20 can temporally execute processes in place of the stopped provider device 20.

### (Third embodiment)

Next, a credit guarantee system 1 according to a third embodiment of the present disclosure will be described.

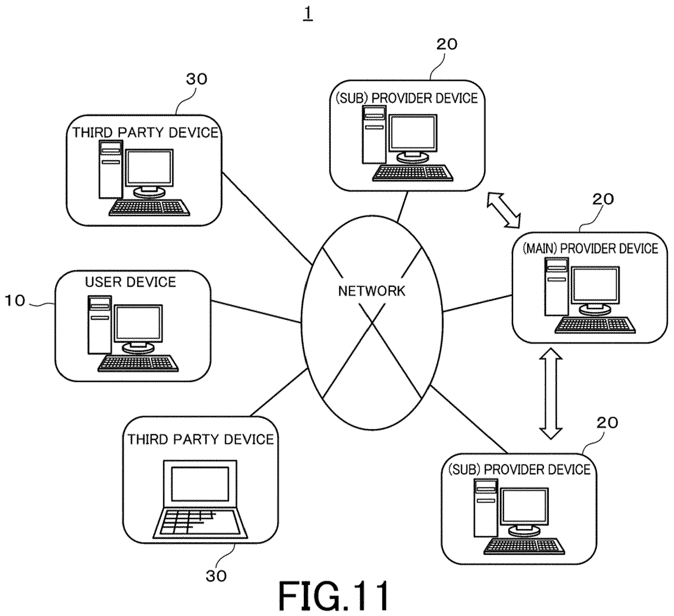

FIG. 11 is a diagram for explaining the credit guarantee system 1 of the third embodiment according to the present disclosure.

The credit guarantee system 1 of the third embodiment is similar to the credit guarantee system 1 of the second embodiment in many respects. Hence, the following description mainly covers the different points from the second embodiment, and the description of the same points may be omitted.

As shown in FIG. 11, the credit guarantee system 1 of the present embodiment includes a plurality of provider devices 20 as in the second embodiment. In the present embodiment, one of the provider devices 20 is set as a main provider device 20, and the other provider device(s) 20 are set as a sub provider device 20.

When one sub provider device 20 executes a process, the details of the process are sent from the sub provider device 20 to the main provider device 20 such that the main provider device 20 has copies of all the details of the processes executed by the sub provider device(s) 20 other than the main provider device 20.

The configurations of the sub provider device 20 and the main provider device 20 are the same as that of the provider device 20 of the first embodiment described above referring to FIG. 2.

A difference is that the user information storage area 21AB of the main provider device 20 stores the user information files stored in the user information storage area 21AB of each sub provider device 20.

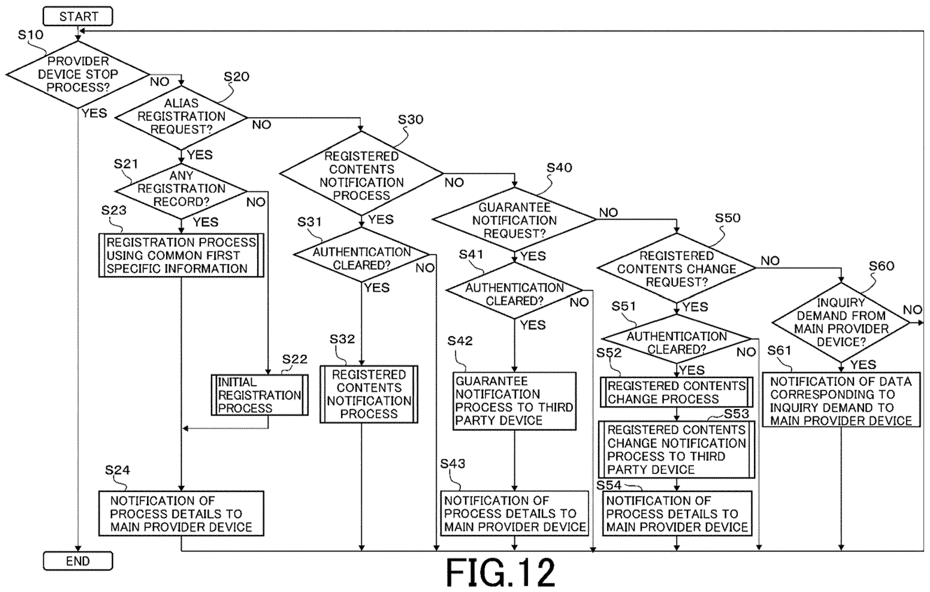

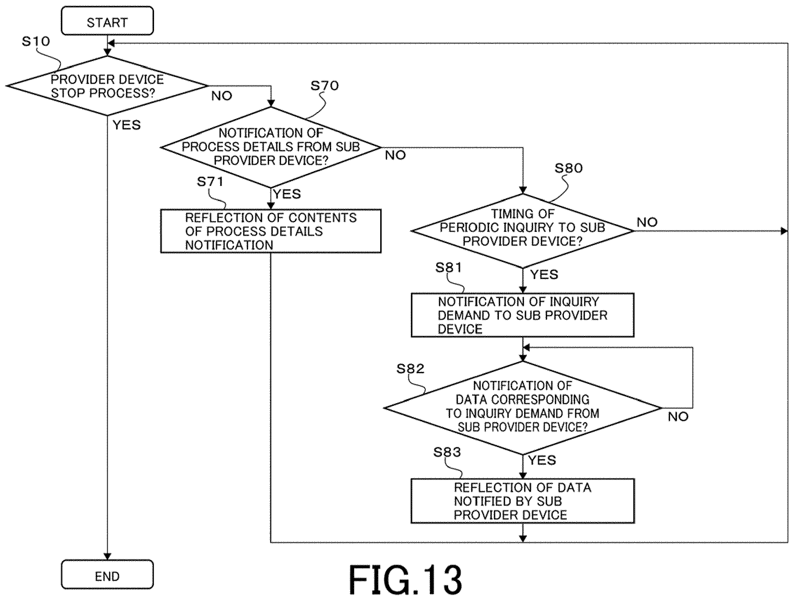

Referring to FIGS. 12 and 13, main processes of the sub provider device 20 and the main provider device 20 of the present embodiment will be described in more detail.

FIG. 12 is a diagram for explaining the main processes of the sub provider device 20 of the third embodiment according to the present disclosure. FIG. 13 is a diagram for explaining the main processes of the main provider device 20 of the third embodiment according to the present disclosure.

Firstly, referring to FIG. 12, the flow of the main processes of the sub provider device 20 will be described.

As can be seen by comparing FIG. 4 and FIG. 12, the processes of the sub provider device 20 are the same in many respects as those of the provider device 20 described in the first embodiment. Therefore, only the different points will be mainly described below, and the description of the same points as those described in the first embodiment may be omitted.

In the first embodiment, after the provider device 20 executes the initial registration process (Step S22), the registration process using common first specific information (Step S23), the guarantee notification process (Step S42), or the registered contents change notification process (Step S53), the provider device 20 returns to the monitor loop processing again.

On the other hand, after the sub provider device 20 of the present embodiment executes the initial registration process (Step S22), the registration process using common first specific information (Step S23), the guarantee notification process (Step S42), or the registered contents notification processing (step S53), the sub provider device 20 notifies the main provider device 20 of the details of the process (Step S24, Step S43 or Step S54). Then, the sub provider device 20 returns to the monitor loop processing.

In this way, when each sub provider device 20 executes a process regarding the user information file (such as a registration of a new user information file or a change in the contents of the user information file), the main provider device 20 receives a notification about the details of the process regarding the user information file (such as a registration of a new user information file or a change in the contents of the user information file) from the sub provider device 20. The main provider device 20 reflects the received details in the data in the user information storage area 21AB of the main provider device 20 to store all the user information files contained in the user information storage area 21AB of each sub provider devices 20.

Basically, the user information files registered in the main provider device 20 are up-to-date, since the details of the processes regarding the user information files (such as a registration of a new user information file or a change in the contents of the user information files) executed by each sub provider device 20 are reflected in the main provider device 20, as described above.

However, in the present embodiment, the main provider device 20 periodically sends an inquiry demand regarding the user information files to each sub provider device 20, thereby receiving the contents of the most recent user information files from each sub provider device 20.

This inquiry demand may be not only for all the user information files, but also the user information files registered in a certain period of time.

Therefore, as shown in FIG. 12, a process to determine whether the sub provider device 20 has received an inquiry demand from the main provider device 20 (Step S60) (an inquiry demand from the main provider device) is added to the processes of the sub provider device 20. When the sub provider device 20 has received the inquiry demand from the main provider device 20 (Step S60: YES), the flow proceeds to Step S61, where the sub provider device 20 notifies the main provider device 20 of data (data of the user information files) corresponding to the inquiry demand from the main provider device 20, and then returning to the monitor loop processing.

If the determination in Step S60 is NO, the flow does not proceed to Step S61 and the monitor loop processing is continued.

Next, referring to FIG. 13, the flow of the main processes of the main provider device 20 will be described.

As shown in FIG. 13, on starting the processing, the main provider device 20 executes the monitor loop processing to monitor that any one of steps S10, S70 and S80 is determined Yes.

When receiving the provider device stop process (Step S10: YES) through an operation by the provider, the main provider device ends the processing. These points are the same as previously described.

A difference is that when receiving the notification of the details of the process executed by the sub provider device 20, which is sent after the sub provider device 20 has finished executing the process (Step S70: YES), the main provider device 20 reflects the notified details (Step S71), and returns to the monitor loop processing again.

For example, when the sub provider device 20 registers a user information file for a new user, the sub provider device 20 sends the contents of the user information file of the new user to the main provider device 20 as the process details notification. Then, the main provider device 20 reflects the new user information file in the data of the user information storage area 21AB of the main provider device 20 (Step S71), and returns to the monitor loop process again.

As another difference, at a timing of a periodic inquiry to the sub provider device 20 (Step S80: YES), the main provider device 20 proceeds to Step S81, where the main provider device 20 notifies the sub provider device 20 of the inquiry demand.

Then, the main provider device 20 monitors whether the main provider device 20 has received a notification of data, which is sent from the sub provider device 20 corresponding to the inquiry demand (Step S82). When the main provider device 20 receives the notification of the data from the sub provider device 20 corresponding to the inquiry demand (Step S82: YES), the main provider device 20 reflects the data notified by the sub provider device 20 (the data of the user information files) in the data of the user information storage area 21AB (the user information files in the user information storage area 21AB) of the main provider device 20 (Step S83), and then returns to the monitor loop processing again.

As described above, the credit guarantee system 1 of the third embodiment has the configuration where one provider device 20 of the provider devices 20 is set as the main provider device 20 and the remaining provider device(s) 20 are set as the sub provider device 20; and the data is shared between the main provider device 20 and each sub provider device 20 as shown in FIG. 11 (see white arrows in FIG. 11). Hence, the main provider device 20 can centrally manage the user information files as required.

In the present embodiment, the main provider device 20 possesses the user information files of the entire credit guarantee system 1, so that the user information files of each sub provider device 20 can be restored as required. However, the main provider device 20 may execute the same processes as those of the sub provider device 20.

In this case, the processes shown in FIG. 4 are added to the processes of the main provider device 20 shown in FIG. 13.

Specifically, the monitor loop processing may contain Step S10, Step S70, Step S80, Step S20, Step S30, Step S40 and Step S50, and the process of each step may be executed in the same manner described above.

While the present invention has been described above based on the specific embodiments, the present invention is not limited to the specific embodiments exemplified above.

For example, in the embodiments above, the provider is a juridical person such as a company limited. However, the provider is not limited thereto, and may be a national government, a local public entity or the like. A national government and at least one local public entity may form the provider in cooperation. Several countries may form the provider in cooperation.

Alternatively, a company (e.g. a bank) or an administrative agency affiliating with the provider may confirm the user's credibility; and, after completing the credibility confirmation, the provider may receive the data of the credit verification document (e.g. PDF) so as to register, in the user information storage area 21AB, a user information file of the user who wants to use an alias of which credibility has been confirmed.

Further, in the above embodiments, the third party is the counterparty of the user in a commercial transaction or the like. However, for example, the third party may be the other side of the user in a communication on social network service or social network game.

In this case, this third party may also want to use an alias without disclosing personal information to communicate with the user. In that event, the third party device 30 of the third party is the user device 30 of the user who wants to use an alias.

In this instance, one of these users requests the provider to issue the guarantee notification to the effect that the credibility of the alias has been confirmed to the other user, while the other user also requests the provider to issue the guarantee notification to the effect that the credibility of the alias has been confirmed to the one user. The above explanations are applicable also in this situation.

More specifically, when seen individually, when one user requests the provider to issue the guarantee notification to the effect that the credibility of the alias has been confirmed to the other user, the device of the one user is the user device 10 and the device of the other user is the third party device 30. Conversely, when the other user requests the provider to issue the guarantee notification to the effect that the credibility of the alias has been confirmed to the one user, the device of the other user is the user device 10 and the device of the one user is the third party device 30. The above descriptions also hold true for this situation.

In the above embodiments, the user information files of the users are stored in the user information storage area 21AB. However, the information of each user may be stored in a user information database.

Thus, the present invention is not limited to the specific embodiments. Variations and modifications thereof are included in the technical scope of the present invention, which is obvious to those skilled in the art from the description of the claims.

### Reference Signs List

- 1: credit guarantee system
- 10: user device
- 11: display
- 12: webcam
- 20: provider device
- 21: main body
- 21A: storage
- 21AA: program storage area
- 21AB: user information storage area
- 21AC: temporary storage area
- 21AD: other data storage area
- 21B: CPU
- 21C: communication unit
- 21D: bus
- 22: display
- 23: operation unit
- 30: third party device
- A: alias information
- B: user real information
- C: guarantee notification issuance history
- D: credit verification document data

## Claims

1. A credit guarantee system configured to grant credit to an alias, comprising:
a user device of a user who wants to use an alias which can be connected to a network;
a provider device of a provider which guarantees credibility of the alias, wherein the provider device can be connected to the network, and the alias of the user the credibility of which has been confirmed is registered in the provider device; and
a third party device which can be connected to the network and can communicate with the user device and the provider device,
wherein when the provider device receives from the user device a notice of the third party device to which a guarantee notification for guaranteeing the credibility needs to be sent, the provider device issues to the third party device the guarantee notification to the effect that the credibility of the alias has been confirmed.

2. The credit guarantee system according to Claim 1, wherein the alias includes first specific information uniquely assigned by the provider to the user.

3. The credit guarantee system according to Claim 1 or 2, wherein the alias includes second specific information uniquely assigned by the provider to the alias.

4. The credit guarantee system according to any one of Claims 1 to 3, wherein
an application provided by the provider to use the credit guarantee system is installed in the user device, wherein the application has unique identification information which is not made public,
the user device notifies the provider device of authentication information containing the identification information when requesting the provider device for the guarantee notification, and
the provider device issues the guarantee notification to the third party device if an authentication is cleared based on: the authentication information which the user device notified when requesting for the guarantee notification; and authentication information which includes the identification information and is registered in the provider device.

5. The credit guarantee system according to any one of Claims 1 to 4, wherein
confirming the credibility of the alias includes confirming an address of the user, and
the guarantee notification guarantees that the address of the user who uses the alias has been confirmed.

6. The credit guarantee system according to any one of Claims 1 to 5, wherein
confirming the credibility of the alias includes confirming an identity of the user, and
the guarantee notification guarantees that the identity of the user who uses the alias has been confirmed.

7. The credit guarantee system according to any one of Claims 1 to 6, wherein
at least one of a name, an address, an email address and a telephone number of the user is registered in the provider device, and
when a request for the guarantee notification includes an order to present the at least one of the name, the address, the email address and the telephone number of the user to the third party, the provider device presents the at least one of the name, the address, the email address and the telephone number of the user when issuing the guarantee notification.

8. The credit guarantee system according to any one of Claims 1 to 7, wherein the provider device is provided for each predetermined area, and
the alias includes third specific identification uniquely assigned to the provider device that has registered the alias.

9. The credit guarantee system according to any one of Claims 1 to 8, wherein when a change has occurred in contents of which credibility has been confirmed after the issuance of the guarantee notification, the provider device issues to the third party device which received the guarantee notification a notification to the effect that the change has occurred in the contents of which the credibility has been confirmed.
